# NEUE EUROPÄISCHE PATENTSCHRIFT

(11) **EP 0 175 083 B2**
(45) Veröffentlichungstag und Bekanntmachung des Hinweises auf die Entscheidung über den Einspruch: **30.06.1993**
(45) Hinweis auf die Patenterteilung: 07.12.1988
(21) Anmeldenummer: 85108813.8
(22) Anmeldetag: 15.07.1985
(51) Int. Cl.: H02K 3/22

(54) **Anschlussvorrichtung der Ständerwicklungsstäbe elektrischer Maschinen**
Stator coil conductor connecting device of an electrical machine
Dispositif de raccordement des barres d'enroulement statorique d'une machine électrique

(30) Priorität: 07.09.1984 CH 4272/84
(43) Veröffentlichungstag der Anmeldung: 26.03.1986
(73) Patentinhaber: BBC Brown Boveri AG, CH-5401 Baden (CH)
(72) Erfinder: Brem, Ernst, CH-8952 Schlieren (CH)

(56) Entgegenhaltungen:
- CH-A- 481 517
- DE-A- 1 913 218
- DE-A- 2 803 015
- FR-A- 1 067 639
- ELEKTROTECHNISCHE ZEITSCHRIFT E.T.Z., Ausgabe B, Band 25, Nr. 18, 1973, Seiten 490-497, VDE-Verlag GmbH, Berlin, DE; K. JÄGER: "Flüssigkeitskühlung bei elektrischen Maschinen"
- BBC-Nachrichten 60 (1978), H.1, S. 3ff, K. Jäger, "Turbogeneratoren für grosse Kernkraftwerke"
- KWU-Prospekt "Turbogeneratoren", März 1982, Bestell-Nr. K/10437-01, Code 15919 PA 0382 6.
- AEG-Mitteilungen 52 ( 1962) , H 9/10, S 429 ff K. Wanke: " Wassergekühlte Türbogeneratoren ".
- H. Sequenz, Hrsg.: Herstellung der wicklungen elektrischer M Maschinen ( Springer Verlag Wien 1973 ) S. 69 ff G Neidhöfer: " Kunststäbe ( Roebelstäbe ) ".

## Beschreibung

Die Erfindung bezieht sich auf eine Anschlussvorrichtung gemäss dem Oberbegriff des Patentanspruchs 1.

Mit diesem Oberbegriff nimmt die Erfindung Bezug auf einen Stand derTechnik, wie er sich beispielsweise aus der Zeitschrift « BBC Nachrichten », 60 Heft 1/1978, S. 6, Bild 5, ergibt.

Bei den bekannten Anschlussvorrichtungen zur gleichzeitigen elektrischen Verbindung zweier benachbarter Ständerwicklungsstäbe und Zuführung bzw. Abführung der Kühlflüssigkeit zu bzw. von den hohlen Leitern der Ständerwicklungsstäbe lassen sich generell zwei Ausführungsformen unterscheiden.

Bei der ersten, wie sie aus der genannten Zeitschrift « BBC... » bekannt ist, sind zwei übereinanderliegende Stabenden durch eine Lasche oder Bügel elektrisch miteinander verbunden. Aus der Lasche ragen die Hohlleiter je eines Stables in je eine Wasserkammer und sind dort mit dieser verbunden. Beide Wasserkammern sind mit einem an der Lasche befestigten Zwischenteil verschraubt. Durch die Distanzierung der Wasserkammer vom Stabende kann zwar die Lötverbindung zwischen den Hohlleitern und der Wasserkammer gut kontrolliert werden, die Distanzierung hat jedoch den Nachteil, dass die Wasserkammer nicht direkt mit dem Stabende verbunden ist. Selbst zusätzliches Abstützen der Wasserkammer mittels kunstharzgetränkter Glaskordeln konnte Relativbewegungen zwischen Stabende und Wasserkammer nicht ganz verhindern. Bei dieser Relativbewegung werden die Hohlleiter natürlich etwas deformiert. Tritt die Relativbewegung bei einer Schwingung auf, schwingt also die Wasserkammer relativ zum Stabende, so wiederholt sich der Deformationsvorgang. Bei dieser Relativschwingung zum Stabende kann die wiederholte Deformation der Hohlleiter zu Hohlleiterbrüchen führen.

Bei der zweiten Art von Anschlussvorrichtungen, wie sie z.B. aus der DE-OS 28 03 015 bekannt sind, sind die Kühlflüssigkeitszufuhr und die Schaltverbindung zweier benachbarter Stabenden in einem einzigen Bauteil vereinigt. Beide Stabenden sind direkt mit der Wasserkammer verlötet. Hierbei werden zwar die Hohlleiter nicht beansprucht, doch besteht die Gefahr der Verstopfung der Hohlleiter durch Lötmittel. Zudem ist das Lötverfahren aufwendig. Eine visuelle Kontrolle der Lötstelle und Nachbessern der Lötstelle sind praktisch ausgeschlossen. Darüber hinaus muss für jede Stabgeometrie eine eigene Wasserkammer ausgelegt und hergestellt werden.

Einen allerdings aufwendigen Kompromiss zwischen beiden beschriebenen Arten stellt die Anschlussvorrichtung nach der CH-PS 481 517 dar. Bei dieser Anschlussvorrichtung zur Zuführung der Kühlflüssigkeit zu den hohlen Leitern der Ständerwicklungsstäbe elektrischer Maschinen sind die hohlen und die massiven Leiter des Wicklungsstabes von einem Aufsatz zusammengefasst, der einerseits mit einem Zulaufstutzen für die Kühlflüssigkeit und andererseits elektrisch mit den hohlen und massiven Leitern verbunden ist. Die hohlen Leiter ragen aus dem Aufsatz in den Innenraum der Wasserkammer hinein und sind in einer Einsatzbuchse flüssigkeitsdicht verlötet die an der Stirnseite des Aufsatzes, wo die hohlen Leiter austreten, befestigt ist. Am Aufsatz ist ferner ein Paket biegsamer Bänder angeschweisst, die für die elektrische Verbindung zwischen benachbarten Stäben sorgen. Der freie Zugang zu den Enden der Hohlleiter ermöglicht die Überprüfung der Kanäle in jedem Hohlleiter auf Durchlässigkeit und hydraulischen Widerstand und erleichtert eventuelle Reparaturarbeiten. Der Aufsatz bildet eine starre Verbindung zwischen den Leiterstabenden und der Wasserkammer. Er ist aufgrund seiner Dreifachfunktion sehr aufwendig. Darüber hinaus vergrössert er die Gesamtausladung des Wickelkopfes in beträchtlichem Masse, muss jeder Stabgeometrie eigens angepasst werden und erfordert umfangreiche Manipulation beim Zurechtbiegen der Hohlleiter.

Beim Anschlussstück nach der DE-A-1 913 218 stossen die massiven Teilleiter stumpf an die Stirnwand einer Wasserkammer und sind dort mit letzterer verlötet, während die Hohlleiter geradlinig durch diese Stirnwand in die Wasserkammer geführt sind. Somit erfolgt die Zusammenfassung aller Leiter nicht distanziert von der Wasserkammer. Ein Zugang zu allen Lötstellen ist damit nicht gegeben.

Ausgehend vom vorstehend geschilderten Stand der Technik liegt der Erfindung die Aufgabe zugrunde, eine Anschlussvorrichtung der genannten Gattung zu schaffen, welche eine optimale Abstützung der Wasserkammer am Stabende bei geringer axialer Baulänge und einfacher Fabrikation ermöglicht.

Die Lösung dieser Aufgabe erfolgt durch die in den Patentansprüchen gekennzeichnete Erfindung.

Der Erfindungsgegenstand vereinigt in sich die Vorteile der Anschlussvorrichtungen nach « BBC-Nachrichten » a.a.0. einerseits und derjenigen nach der DE-OS 28 03 015 und CH-PS 481 517 ohne deren Nachteile aufzuweisen:
- Alle kritischen Lötstellen, insbesondere diejenigen in der Einlötplatte, können von beiden Seiten visuell kontrolliert werden. Nachbesserungen der Lötverbindungen sind selbst im eingebauten Zustand der Wicklung möglich.
- Die Wasserkammer ist mit dem Stabende starr verbunden, so dass keine Relativschwingungen auftreten können.
- Das in fabrikatorischer Hinsicht aufwendigste Bauteil, die Wasserkammer, ist nicht mehr von der Stabgeometrie abhängig. Die ganze Varianz liegt in der Anpassung der Einlötplatte hinsichtlich Lochbild und Grösse der hohlen Leiter.
- Die hohlen Leiterenden bedürfen keiner nachträglichen Verformung zwecks Anpassung an die Einlötplatte.
- Die beiden kritischsten Lötverbindungen (Hohlleiter-Einlötplatte, Einlötplatte-Wasserkammer) können nacheinander hergestellt, kontrolliert und gegebenenfalls nachgearbeitet werden.

Die Erfindung wird nachstehend anhand eines in der Zeichnung dargestellten Ausführungsbeispiels näher erläutert.

In der Zeichnung zeigt:
Fig. 1 einen Längsschnitt durch die Endpartie zweier übereinanderliegender Statorwicklungsstäbe mit zugehöriger Anschlussvorrichtung,
Fig. 2 einen Querschnitt durch das Stabende gemäss Fig. 1 längs deren Linie AA,
Fig. 3 eine perspektivische Darstellung der Endpartie gemäss Fig. 1.

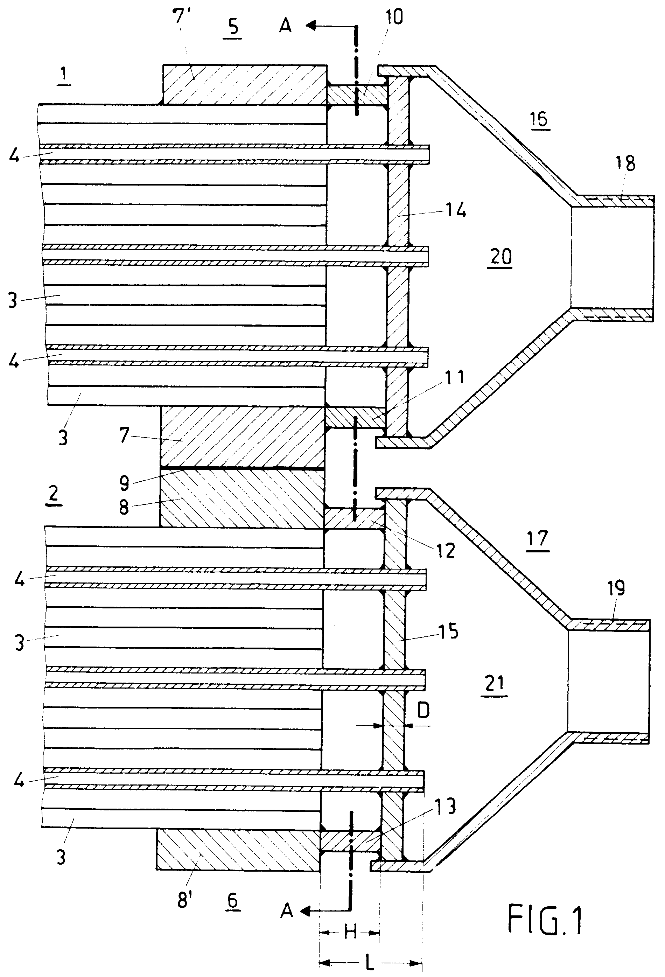

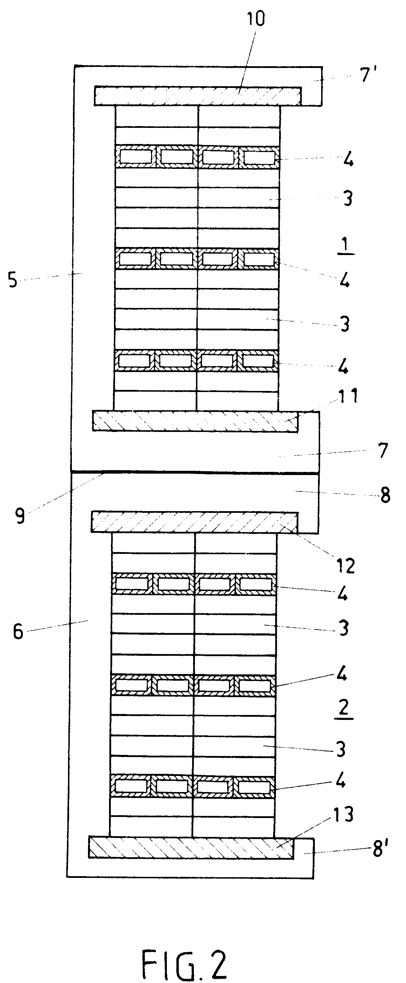

In Fig. 1 bis 3 setzen sich generell mit 1 und 2 bezeichnete Statorwicklungsstäbe aus massiven Teilleitern 3 und Hohlleitern 4 zusammen, deren Verteilung über den Stabquerschnitt aus Fig. 2 ersichtlich ist. Die Hohlleiter 4 überragen die massiven Teilleiter 3 um die Länge L. Die elektrische und mechanische Verbindung der Teil- und Hohlleiter eines Stabes ist je durch einen U-förmigen Bügel 5, 6 aus Kupfer bewerkstelligt, der bündig zu den Stirnflächen der massiven Teilleiter 3 mit dem Stabende hartverlötet ist. Die einander zugewandten Schenkel 7, 8 der Bügel 5, sind so bemessen, dass sie im eingebauten Zustand der Ständerwicklungsstäbe aufeinander zu liegen kommen. Sie werden dann grossflächig miteinander hartverlötet (Lötfuge 9) und steilen die (elektrische) Schaltverbindung zwischen den Stäben 1 und 2 her.

Auf den nach aussen weisenden Stirnflächen der Schenkel 7, 7' und 8, 8' der Bügel 5, 6 sind jeweils quaderförmige Distanzstücke 10, 11, 12, 13 befestigt, die mit den Bügeln 5, 6 auch einstückig ausgebildet sein können. Auf die Distanzstücke 10, 11 und 12, 13 folgt je eine Einlötplatte 14 bzw. 15. Die Einlötplatten weisen eine der Anzahl der Hohlleiter 4 entsprechende Anzahl Durchbrüche auf, deren Querschnitt und Verteilung über die Einlötplatte dem Querschnitt und der Verteilung der Hohlleiter 4 über den Stabquerschnitt entspricht. Die Höhe H der Distanzstücke 10, 11, 12, 13, die Dicke D der Einlötplatten und das Überstehmass L der Hohlleiter 4 sind so aufeinander abgestimmt, dass die Hohlleiter 4 die Einlötplatte um einige wenige Millimeter überragen.

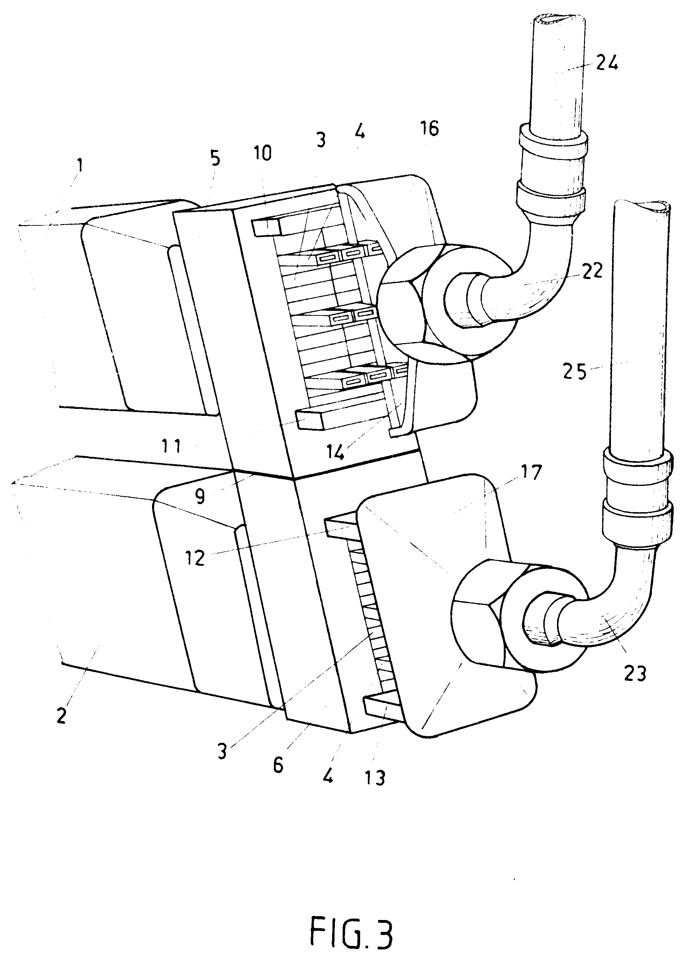

Die Einlötplatten 14, 15 sind sowohl mit den Distanzstücken 10, 11, 12, 13 als auch mit den sie durchdringenden Hohlleitern 4 hartverlötet. Über die Einlötplatten 14, 15 ist jeweils eine pyramidenstumpfförmige Kappe 16, 17, mit Anschlussstutzen 18, 19 gestülpt und mit den Einlötplatten flüssigkeitsdicht hartverlötet. Die Einlötplatten 14, 15 bilden zusammen mit den Kappen 16, 17 die eigentlichen Wasserkammern 20 bzw. 21. An die Wasserkammer wird die Schlaucharmatur 22, 23 eines Isolier-Schlauches 24, 25 (Fig. 3) angeschlossen, welcher die Kammer gegen ein auf Erdpotential liegendes Sammelrohr isoliert (vgl. hierzu « BBC-Nachrichten » a.a.O. Bild 5 und 6).

Die Herstellung der beschriebenen Anschlussvorrichtung vollzieht sich im wesentlichen in folgenden Verfahrensschritten:
a) Aufbau des Wicklungsstabes ausserhalb der Maschine aus gegeneinander isolierten massiven Teilleitern 3 und Hohlleitern 4, wobei vorgängig die Teilleiterisolation am Stabende auf einer der axialen Erstreckung der Bügel 5, 6 entsprechenden Länge entfernt wurde.
b) Hartverlöten der Bügel 5, 6 mit den Stabenden, wobei die Fugen zwischen den Teilleitern bzw. Hohlleitern mit Lötmaterial gefüllt werden.
c) Anbringen der Distanzstücke 10, 11, 12, 13 an den Stirnflächen der Schenkel 7, 7' 8, 8' der Bügel 5, 6, falls diese nicht bereits an den Schenkeln vorgesehen sind.
d) Aufstecken der Einlötplatten 14, 15 auf die vorstehenden Hohlleiterenden und Hartverlöten der Einlötplatten sowohl mit den Hohlleitern 4 als auch mit den Distanzstücken 10, 11, 12, 13.
e) Überprüfung der Lötstellen, insbesondere zwischen Einlötplatten und Hohlleitern.
f) Aufstecken der Kappen 16, 17 und Hartverlöten mit den Einlötplatten 14, 15.
g) Kontrolle der Wasserkammer auf Dichtheit.
h) Anbringen der Hauptisolation, Tränkung mit Imprägnierharz und Ausbacken der Wicklungsstäbe.
i) Einbauen und Fixieren der Stäbe in den Stator unten.
j) Herstellen der Schaltverbindung durch Hartverlöten der gegeneinander gerichteten Schenkel 7, 8 der Bügel 5, 6.
k) Anschluss der Wasserkammern 20, 21 an das Kühlsystem des Ständers.

Ohne den Rahmen der Erfindung zu verlassen, sind eine Reihe von Abwandlungen des beschriebenen Ausführungsbeispiels möglich:

Die Bügel 5, können z.B.je zweiteilig und als die Stabenden vollständig umschliessende Halbbügel mit U-Profil oder als Hülse mit Rechteckquerschnitt ausgebildet sein.

Die beiden Bügel 5 und 6 können einstückig, z.B. mit E- oder H-Profil ausgeführt werden oder es werden auf beiden Seiten der Stabenden Halbbügel mit E-Profil mit den Stabenden hartverlötet. Diese Varianten erfordern jedoch eine andere Abfolge der oben aufgeführten Verfahrensschritte.

Schritt b, ebenfalls c, d, e, f, g würden sich in dieser Reihenfolge an den Schritt i anschliessen; Schritt j würde entfallen.

Sofern es kühlungstechnische Gründe erlauben, kann unter Anwendung der Erfindung auch eine zwei Stabenden umfassende Wasserkammer verwirklicht werden. Hierzu wären lediglich die Einlötplatten 14, 15 zu einer gemeinsamen Platte zu vereinigen und die Kappe 16 und 17 dementsprechend anzupassen.

## Patentansprüche

1. Anschlußvorrichtung zur Zuführung bzw. Abführung der Kühlflüssigkeit zu bzw. von den hohlen Leitern der Ständerwicklungsstäbe (1, 2) elektrischer Maschinen, bei der die hohlen (4) und die massiven Leiter (3) benachbarter Ständerwicklungsstäbe von einem metallischen Bauteil zusammengefaßt sind, das als die Stabenden zumindest teilweise umfassender Bügel (5, 6) oder Hülse mit an dessen bzw. deren Stirnseite angeordnetem Distanzstück ausgebildet und mit diesen Stabenden verbunden ist und einerseits mit mindestens einer Wasserkammer (20, 21) für die Kühlflüssigkeit und andererseits mit den hohlen (4) und massiven Leitern (3) verbunden ist, und wobei ausschließlich die hohlen Leiter (4) aus dem metallischen Bauteil herausragen und in den Innenraum der Wasserkammer geführt sind und in einer für jede Wasserkammer vorgesehenen Einlötplatte (14, 15) flüssigkeitsdicht befestigt sind, die an der Stirnseite des metallischen Bauteils, wo die hohlen Leiter austreten, befestigt ist, dadurch gekennzeichnet, daß der Bügel (5, 6) oder die Hülse mit den Stabenden hartverlötet ist und die Hohlleiter (4) geradlinig weitergeführt sind, daß zur Schaffung eines Zugangs zu den Lötstellen die Einlötplatte (14, 15) unter Zwischenschaltung von einer Mehrzahl von unmittelbar zwischen der jeweiligen Einlötplatte (14, 15) und der Stirnseite des Bügels (5, 6) bzw. der Hülse angeordneten Distanzstücken (10, 11, 12, 13) an der Stirnseite des Bügels (5, 6) bzw. der Hülse stoffschlüssig befestigt ist, und daß die Wasserkammer (20, 21) unmittelbar mit der Einlötplatte (14, 15) stoffschlüssig und flüssigkeitsdicht verbunden ist.

2. Anschlussvorrichtung nach Anspruch 1, dadurch gekennzeichnet, dass die Hohlleiterenden in die Wasserkammer (20, 21) hineinragen.

3. Anschlussvorrichtung nach Anspruch 1 oder 2, dadurch gekennzeichnet, dass die Bügel (5, 6) U-, H-oder E-förmigen Querschnitt aufweisen und die Stabenden in die Distanzen zwischen den Schenkeln (7, 7', 8, 8') der Bügel eingelegt und dort mit diesen hartverlötet sind.

4. AnschlussvorrichtungnacheinemderAnsprüche 1 bis 3, dadurch gekennzeichnet, dass zur elektrischen Verbindung zweier Stabenden untereinander die jeweiligen Bügel (5, 6) miteinander hartverlötet sind.

5. Anschlussvorrichtung nach Anspruch 3, dadurch gekennzeichnet, dass die Bügel ein- oder zweiteilig ausgebildet sind und zwei benachbarte Stabenden zumindest teilweise umfassen.

## Claims

1. Connecting device for the supply or removal of the cooling fluid to or from the hollow conductors of the stator winding rods (1, 2) of electrical machines in which the hollow conductors (4) and the solid conductors (3) of adjoining stator winding rods are held together by a metallic component which is designed as a yoke (5, 6) or sleeve having a distance piece, arranged on its or their end, and enclosing, at least partially, the rod ends and is connected to these rod ends and, on the one hand, is connected to at least one water chamber (20, 21) for the cooling fluid and, on the other hand, to the hollow conductors (4) and the solid conductors (3), and in which device exclusively the hollow conductors (4) protrude from the metallic component and are led into the internal space of the water chamber and are fastened, in such a way that liquid cannot leak, into a brazing plate (14, 15), provided for every water chamber, which is fastened to the end of the metallic component where the hollow conductors emerge, characterised in that the yoke (5, 6) or the sleeve is brazed to the rod ends and the hollow conductors (4) are led on in a straight line, that the brazing plate (14, 15) is fastened integrally to the end of the yoke (5, 6) or the sleeve with the insertion of a plurality of distance pieces (10, 11, 12,13) arranged immediately between the particular brazing plate (14, 15) and the end of the yoke (5, 6) or the sleeve to create access to the brazing points, and that the water chamber (20, 21) is directly connected integrally and in such a way that liquid cannot leak to the brazing plate (14, 15).

2. Connecting device according to Claim 1, characterised in that the hollow conductor ends penetrate into the water chamber (20, 21).

3. Connecting device according to Claims 1 or 2, characterised in that the yoke (5, 6) has a U-shaped, H-shaped or E-shaped cross-section and that the rod ends are inserted into the distances between the arms (7, 7', 8, 8') of the yoke and are there brazed to the latter.

4. Connecting device according to one of the Claims 1 to 3, characterised in that the particular yokes (5, 6) are brazed together to provide the electrical connection between two rod ends.

5. Connecting device according to Claim 3, characterised in that the yokes have a one-piece or two- piece design and enclose, at least partially, two adjacent rod ends.

## Revendications

1. Dispositif de raccordement pour l'alimentation respectivement l'évacuation du liquide de refroidissement vers respectivement hors des conducteurs creux des barres d'enroulement statorique (1, 2) de machines électriques, dans lequel les conducteurs creux (4) et les conducteurs massifs (3) de barres d'enroulement statorique voisines sont assemblés par un élément métallique, qui se présente sous la forme d'un étrier (5, 6) ou d'une douille avec une pièce d'écartement disposée sur la face d'extrémité de celui-ci ou de celle-ci, entourant au moins partiellement les extrémités de la barre et relié à ces extrémités de la barre, lequel est relié d'une part à au moins une chambre d'eau (20, 21) pour le liquide de refroidissement et d'autre part aux conducteurs creux (4) et aux conducteurs massifs (3), et dans lequel les conducteurs creux (4) uniquement sortent à travers l'élément métallique et pénètrent dans le volume intérieur de la chambre d'eau et sont fixés hermétiquement dans une plaque de brasage (14, 15) prévue pour chaque chambre d'eau qui est elle-même fixée à la face d'extrémité de l'élément métallique par laquelle les conducteurs creux sortent, caractérisé en ce que l'étrier (5, 6) ou la douille sont assemblés aux extrémités de la barre par brasage dur et que les conducteurs creux (4) sont prolongés en ligne droite, en ce que pour procurer un accès aux points de brasage la plaque de brasage (14, 15) est fixée matériellement à la face d'extrémité de l'étrier (5, 6) respectivement de la douille avec interposition d'une pluralité de pièces d'écartement (10, 11, 12, 13) disposées directement entre chaque plaque de brasage (14, 15) et la face d'extrémité de l'étrier (5, 6) respectivement de la douille, et en ce que la chambre d'eau (20, 21) est reliée matériellement et hermétiquement directement à la plaque de brasage (14, 15).

2. Dispositif de raccordement suivant la revendication 1, caractérisé en ce que les extrémités des conducteurs creux pénètrent dans la chambre d'eau (20, 21).

3. Dispositif de raccordement suivant la revendication 1 ou 2, caractérisé en ce que les étriers (5, 6) présentent une section en forme de U, H ou E et en ce que les extrémités de barre sont placées dans les intervalles compris entre les ailes (7, 7', 8, 8') des étriers et y sont assemblées à ceux-ci par brasage dur.

4. Dispositif de raccordement suivant l'une ou l'autre des revendications 1 à 3, caractérisé en ce que pour assurer la liaison électrique de deux extrémités de barres, les étriers (5, 6) correspondants sont assemblés l'un à l'autre par brasage dur.

5. Dispositif de raccordement suivant la revendication 3, caractérisé en ce que les étriers sont réalisés en une seule ou en deux pièces et entourent au moins partiellement deux extrémités de barres voisines.
